# EUROPÄISCHE PATENTSCHRIFT

(11) **EP 2 395 349 B1**
(45) Veröffentlichungstag und Bekanntmachung des Hinweises auf die Patenterteilung: **28.09.2016**
(21) Anmeldenummer: 11004576.2
(22) Anmeldetag: 03.06.2011
(51) Int. Cl.: G01N 29/04

(54) **Elektromagnetisches Ultraschall (EMUS)-Wandlersystem sowie ein Verfahren zur Erzeugung linear polarisierter Transversalwellen mit variabel vorgebbarer Polarisationsrichtung innerhalb eines Prüfkörpers**
Electromagnetic acoustic transducer (EMAT) system and a method for generating linear polarised transversal waves with variable predefined polarisation direction within a test piece
Système de transducteur électromagnétique acoustique (EMAT) et procédé de génération d'ondes transversales polarisées linéairement avec une direction de polarisation préréglée variablement dans l'échantillon

(30) Priorität: 08.06.2010 DE 102010023028
(43) Veröffentlichungstag der Anmeldung: 14.12.2011
(73) Patentinhaber: Fraunhofer-Gesellschaft zur Förderung der angewandten Forschung e.V., 80686 München (DE)
(72) Erfinder: Niese, Frank, 66125 Saarbrücken (DE)
(74) Vertreter: Rösler, Uwe

(56) Entgegenhaltungen:
- EP-A1- 0 775 910
- DE-A1- 3 511 768
- DE-A1- 4 101 942

## Beschreibung

### Technisches Gebiet

Die Erfindung bezieht sich auf ein EMUS-Wandlersystem sowie ein Verfahren zur Erzeugung oder Detektion linear polarisierter Transversalwellen mit variabel vorgebbarer Polarisationsrichtung innerhalb eines zumindest ferromagnetische Materialanteile enthaltenden Prüfkörpers mit einer Prüfkörperoberfläche, mit einer Magnetisierungseinheit, die dazu vorgesehen und eingerichtet ist, an der Oberfläche des Prüfkörpers anordenbar zu sein und ein parallel zur Prüfkörperoberfläche innerhalb des Prüfkörpers orientiertes Magnetfeld zu erzeugen, sowie mit wenigstens einer HF-Spulenanordnung.

Linear polarisierte Ultraschall-(US)-Transversalwellen werden vorzugsweise zur zerstörungsfreien Werkstoffprüfung sowie zur Beurteilung von Werkstoffzuständen, wie Texturen oder inneren Spannungen eingesetzt. Hierzu ist es notwendig die Polarisationsrichtung der in den zu untersuchenden Werkstoff einzukoppelnden, linear polarisierten US-Transversalwellen jeweils parallel und senkrecht zur Vorzugsrichtung der jeweiligen Textur oder inneren Spannung auszurichten, um auf diese Weise für den anisotropen Werkstoff charakteristische Ausbreitungsunterschiede der US-Wellen in den jeweiligen Ausbreitungsrichtungen erfassen und entsprechend auswerten zu können. Zudem können durch geeignetes Ausrichten, d.h. Verdrehen der Polarisationsrichtung der US-Wellen relativ zum Werkstoffgefüge, wie bspw. Werkstücke aus Gusseisen, optimale Ausbreitungsbedingungen für US-Wellen geschaffen werden, um bestimmte auswertbare Wechselwirkungen zwischen den US-Wellen und dem jeweiligen Werkstück hervorzurufen. Auch ist es möglich die Orientierung senkrecht von der Werkstückoberfläche ins Werkstoffinnere verlaufende Risse räumlich aufgelöst zu erfassen.

### Stand der Technik

Linear polarisierte US-Transversalwellen werden typischerweise mittels piezoelektrischer oder elektromagnetischer Ultraschallwandler erzeugt.
Die Verwendung von piezoelektrischen Ultraschallwandlern macht den Einsatz eines Koppelmittels erforderlich, über das die seitens eines piezoelektrischen Ultraschallprüfkopf erzeugten Ultraschallsignale bzw. -schwingungen in ein zu untersuchendes Werkstück ein- sowie aus diesem wieder ausgekoppelt werden können. In nachteilhafter Weise beeinflussen jedoch das Koppelmittel sowie auch die Koppelspaltdicke zwischen der Werkstückoberfläche und dem Ultraschallprüfkopf die Signalqualität und somit die Aussagekraft der Messergebnisse. Speziell im Fall von Transversalwellen bedarf darüber hinaus eines möglichst hoch viskosen Koppelmittels, wodurch zusätzlich die Prüfbedingungen besonders bei Prüfkopfbewegungen erschwert werden. Zudem verunreinigt das Koppelmittel die Werkstückoberfläche, ein Umstand, der gerade bei Untersuchungen an Qualitätsoberflächen unerwünscht in Erscheinung tritt. Zudem beschränkt der Einsatz von Koppelmittel die Verwendung dieser Untersuchungsmethode an Werkstücken bei höheren Temperaturen.

Eine Alternative hierzu ergibt sich durch die Nutzung elektromagnetischer Ultraschallwandler (EMUS), mit denen besonders gut transversal polarisierte Ultraschallwellen und modenrein geführte Ultraschallwellen angeregt werden können. Bei dieser Technik werden Ultraschallsignale direkt in den oberflächennahen Schichten einer Komponente ohne Koppelmittel, d.h. berührungsfrei über elektromagnetische Wechselwirkung angeregt und abgegriffen. In ferromagnetischen Werkstoffen beruht die Anregung hauptsächlich auf dem Effekt der Magnetostriktion, in nichtmagnetischen, elektrisch leitenden Werkstoffen wirkt dagegen die Lorenzkraft als Anregungsmechanismus. Näheres hierzu ist aus den folgenden Artikeln zu entnehmen: Hirao, M. and Ogi, H. (2003), EMATS for Science and Industry (Kluwer Academic Publishers) sowie Igarashi, B., Alers, G. A., "Excitation of Bulk Shear Waves in Steel by Magnetostrictive Coupling", IEEE Ultrasonic Symposium Proceedings (1998) 893-896.

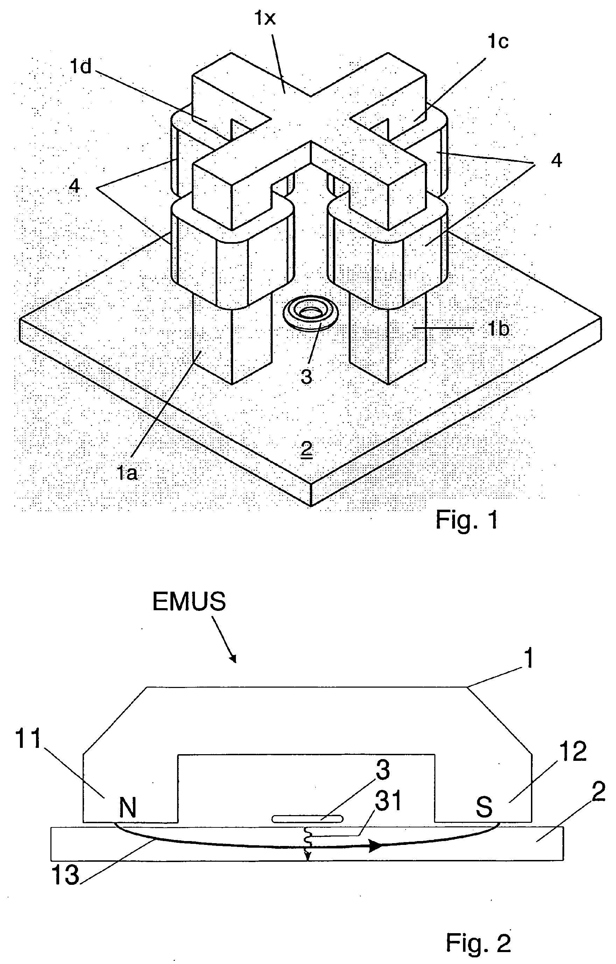

In Figur 2 ist eine an sich bekannte EMUS-Wandleranordnung zur Erzeugung transversal polarisierter Ultraschallwellen innerhalb eines aus ferromagnetischem Werkstoff bestehenden Werkstücks 2 illustriert. Der EMUS-Wandler besteht aus einer Magnetisierungseinheit 1 sowie einem HF-Spulensystem 3. Die Magnetisierungseinheit 1, die in Form eines Permanentmagneten oder eines mit Gleich- oder niederfrequentem Wechselstrom betriebenen Elektromagneten ausgebildet sein kann, sieht zwei auf die Prüfkörperoberfläche aufsetzbare Bereiche 11, 12 vor, von denen einer den magnetischen Nordpol N und der andere den magnetischen Südpol S darstellen. Auf diese Weise wird oberflächennah in den Prüfkörper 2 ein parallel zur Prüfkörperoberfläche orientiertes Magnetfeld 13 eingeleitet. Das HF-Spulensystem 3, das aus einer einzigen oder aus einer Mehrzahl von Spulen bestehen kann, befindet sich zwischen dem magnetischen Nord- und Südpol der Magnetisierungseinheit 1 möglichst oberflächennah auf der Prüfkörperoberfläche um im Bereich des parallel orientierten Magnetfeldes 13 innerhalb des Prüfkörpers 2 durch entsprechende elektrische Anregung, vorzugsweise mittels eines leistungsstarken HF-Burst-Signal, ein hochfrequentes elektromagnetisches Feld zu erzeugen, durch das das parallel zur Prüfkörperoberfläche orientierte Magnetfeld 13 moduliert wird. Aufgrund innerhalb des ferromagnetischen Werkstoffes des Prüfkörpers 2 wirkender magnetostriktiver Effekte kommt es durch die Modulation des quasi-stationären Magnetfeldes 13 durch das hochfrequente elektromagnetische Feld zu oszillierenden Kräften, die als Quellen für Ultraschallsignale, insbesondere in Form von sich senkrecht zur Prüfkörperoberfläche ausbreitenden transversal polarisierten Ultraschallwellen 31 dienen. Im Empfangsfall laufen die hierzu reziproken Vorgänge ab. Nähere Einzelheiten hierzu können dem Artikel folgenden Artikel entnommen werden: Niese, F., Yashan, A., Wilhelms, H., "Wall thickness measurement sensor for pipeline inspection using EMAT technology in combination with pulsed eddy current and magnetic flux leakage", 9. European Conference on NDT, 2006, Berlin.

Um mit Hilfe einer EMUS-Prüfkopfanordnung der eingangs geschilderten Art Werkstoffuntersuchungen vornehmen zu können, ist es erforderlich, den gesamten EMUS-Prüfkopf relativ zur Prüfkörperoberfläche zu verdrehen, zumal die Polarisationsrichtung einer mit einem EMUS-Prüfkopf nach Art der in Figur 2 illustrierten Bauform erzeugten linear polarisierten Transversalwelle 31 stets parallel zur Magnetisierungsrichtung, d.h. längs der parallel verlaufenden Magnetlinien des Magnetfeldes 13 innerhalb des Prüfkörpers 2 ausgerichtet sind. Ein Verdrehen zumindest der Magnetisierungseinheit 1 ist in vielen Fällen mit zusätzlichem mechanischen Aufwand verbunden und überdies unerwünscht, zumal hierdurch die Messkonstellation relativ zum Prüfobjekt einer Veränderung unterliegt, die für eine exakte Untersuchung ortsabhängiger Werkstoffzustände an Prüfkörpern fehlerbehaftet ist.

Der DE 41 01 942 ist eine Prüfeinrichtung zum Prüfen ferromagnetischer Werkstücke mittels Ultraschallwellen entnehmbar, die zum schrägen Einschallen vertikal polarisierter Ultraschallwellen in das zu untersuchende Werkstück, eine Überlagerung eines alternierenden, parallel zur Werkstückoberfläche orientierten Magnetfeldes mit einem stationären oder quasistationären, senkrecht zur Werkstückoberfläche orientierten Magnetfeld vorsieht, wobei im Bereich des senkrecht zur Werkstückoberfläche orientierten Magnetfeldes eine HF-Spulenanordnung zur Einkopplung von Wirbelströmen in das Werkstück angebracht ist. Zur Richtungsselektiven Einschallung werden entweder nur im Bereich unterer oder oberer Halbwellen des Wechselstromes Hochfrequenzsendeimpulse zur Ansteuerung der HF-Spulenanordnung ausgelöst. Weder ist mit einer derartigen Prüfanordnung die Erzeugung vertikal zur Werkstückoberfläche in das Werkstück sich ausbreitenden Ultraschallwellen möglich, noch ist eine Einflussnahme auf die räumliche Orientierung der Polarisationsrichtung vorgesehen.
Die Druckschrift DE 35 11 768 A1 beschäftigt sich mit einem elektromagnetischen Wandler, mit dem eine verbesserte Fehlstellendetektion möglich sein soll. Zur Erzeugung von Ultraschallwellen dient eine Vielzahl einzelner Basiselemente von denen jedes einzelne Basiselement aus einem stab- oder stangenförmigen, vorzugsweise gesinterten Ferritkern besteht, um den Hochfrequenzspulenwicklungen gewickelt sind. Im Sendefall baut sich innerhalb eines jeweiligen Kerns ein vom hochfrequenten Wechselstrom abhängiger magnetischer Fluss auf, der bei geringem Abstand zum Prüfobjekt oberflächennah in dieses einzudringen vermag. Sofern das Prüfobjekt aus einem magnetostriktiven Werkstoff besteht, führt das hochfrequente Magnetfeld unmittelbar zur Erzeugung von Ultraschallwellen. Verfügt das Prüfobjekt jedoch nicht über magnetostriktive Werkstoffeigenschaften, so gilt es, das Prüfobjekt in geeigneter Weise vorzumagnetisieren. Hierzu dienen die für den Empfang vorgesehenen Basiselemente.

### Darstellung der Erfindung

Es liegt die Aufgabe zugrunde, ein EMUS-Wandlersystem sowie ein Verfahren zur Erzeugung linear polarisierter Transversalwellen mit variabel vorgebbarer Polarisationsrichtung innerhalb eines zumindest ferromagnetischen Materialanteile enthaltenden Prüfkörpers derart anzugeben, dass ein mechanisches Verdrehen der Prüfkörperanordnung zu Zwecken einer Veränderung der Polarisationsrichtung der innerhalb des Prüfkörpers erzeugten Ultraschallwellen möglichst vermieden werden soll. Ziel ist es, Messungen an Prüfkörpern mittels linear polarisierten Transversalwellen mit jeweils variabel vorgebbaren Polarisationsrichtungen vornehmen zu können, ohne dabei das EMUS-Wandlersystem und insbesondere die Magnetisierungseinheit relativ zum Prüfkörper zu bewegen.

Die Lösung der der Erfindung zugrunde liegenden Aufgabe ist im Anspruch 1 angegeben. Gegenstand des Anspruches 8 ist ein lösungsgemäßes Verfahren zum Erzeugen von Ultraschallwellen in Form linear polarisierter Transversalwellen mit variabel vorgebbarer Polarisationsrichtung. Merkmale, die den Lösungsgedanken in vorteilhafter Weise weiterzubilden vermögen sind Gegenstand der Unteransprüche sowie der weiteren Beschreibung unter Bezugnahme auf die Ausführungsbeispiele zu entnehmen.

Das lösungsgemäße EMUS-Wandlersystem zur Erzeugung linear polarisierter Transversal wellen mit variabel vorgebbarer Polarisationsrichtung innerhalb eines zumindest ferromagnetische Materialanteile enthaltenden Prüfkörpers mit einer Prüfkörperoberfläche, das die an sich bekannten Merkmale des Oberbegriffes des Anspruches 1 aufweist, zeichnet sich lösungsgemäß dadurch aus,
dass wenigstens eine HF-Spulenanordnung auf der Prüfkörperoberfläche angeordnet ist und ein mit dem parallel zur Prüfkörperoberfläche innerhalb des Prüfkörpers orientierten Magnetfeld in Überlagerung tretendes HF-Feld zur Erzeugung oder Detektion von linear polarisierten Transversalwellen mit senkrecht zur Prüfkörperoberfläche orientierter Schallausbreitungsrichtung erzeugt oder detektiert. Ferner sind Mittel vorgesehen, durch die der magnetische Fluss der in den Prüfkörper einzuleitenden Magnetfeldlinien, die von wenigstens einem Magnetisierungskörper ausgehen, derart veränderbar ist, so dass die Raumrichtung des sich parallel zur Prüfkörperoberfläche innerhalb des Prüfkörpers ausbildenden Magnetfeldes vorgebbar änderbar ist.

Um die Drehung des Magnetfeldes ohne eine mechanische Bewegung der Magnetisierungseinheit vornehmen zu können, wird das Magnetfeld innerhalb des Prüfkörpers, das sich bis anhin zwischen den Magnetpolen lediglich zweier auf der Prüfkörperoberfläche platzierter Magnetisierungskörper ausbildet, von einem weiteren Magnetfeld, das wenigstens von einem weiteren Magnetisierungskörper in den Prüfkörper eingeleitet wird, in kontrollierbarer Weise überlagert, so dass sich aus den wenigstens zwei Magnetfeldern ein resultierendes Magnetfeld ausbildet, dessen Magnetfeldlinien gleichfalls parallel zur Prüfkörperoberfläche jedoch mit einer veränderten Ausbreitungsrichtung orientiert sind, zumindest innerhalb eines Prüfkörperbereiches, in dem sich das seitens des HF-Spulensystem erzeugbare hochfrequente elektromagnetische Feld wirksam auszubreiten vermag und in Wechselwirkung mit dem resultierenden Magnetfeld tritt. Zur kontrollierbaren Überlagerung der einzelnen Magnetfelder befinden sich an wenigstens einem, vorzugsweise an allen Magnetisierungskörper Mittel, durch die die Stärke des magnetischen Flusses der jeweils in den Prüfkörper einzuleitenden Magnetfelder variiert werden kann. Auf diese Weise ist es möglich, wie die weiteren Ausführungen zeigen werden, ausschließlich durch geeignete Variation der Magnetflussstärke der zur Ausbildung des resultierenden Magnetfeldes beitragenden Einzelmagnetfelder die räumliche Orientierung der Magnetfeldlinien des für die Erzeugung der linear polarisierten Transversalwellen verantwortlichen Magnetfeldes und somit auch die Polarisationsrichtung der Transversalwellen selbst gezielt zu beeinflussen.

Unter dem Begriff "Magnetisierungskörper" wird ganz allgemein ein körperlich ausgebildeter Magnet verstanden, der über wenigstens eine frei zugängliche Oberfläche verfügt, die zugleich dem Bereich eines Magnetpols entspricht. Die frei zugängliche Oberfläche ist vorzugsweise derart ausgebildet, dass sie möglichst großflächig, d.h. konturgetreu auf die Prüfkörperoberfläche aufsetzbar ist, um eine möglichst verlustarme bzw. -freie Magnetfeldeinkopplung in den Prüfkörper zu ermöglichen. Grundsätzlich ist es möglich, die Magnetisierungskörper voneinander getrennt auszubilden, beispielsweise in Form stabförmiger Magnetkörper.

Bei einer bevorzugten Ausführungsform sind die Magnetisierungskörper jeweils paarweise an ihren den jeweils frei zugänglichen Oberflächen gegenüberliegenden Magnetkörperbereichen über ein magnetisch wirksames Verbindungsjoch verbunden, um den über beide Magnetisierungskörper in den Prüfkörper einzuleitenden magnetischen Fluss zu verstärken. Zwei derart verbundene Magnetisierungskörper-Paare sind relativ zur Prüfkörperoberfläche derart angeordnet, so dass sich ihre magnetisch wirksamen Verbindungsjoche in Projektion auf die Prüfkörperoberfläche durch- bzw. überkreuzen. Eine mögliche Ausführungsvariante sieht vor, die Verbindungsjoche jeweils einstückig unter Ausbildung eines so genannten Kreuzjoches zu realisieren, so dass sämtliche Magnetisierungskörper einstückig über ihre jeweiligen Verbindungsjoche miteinander verbunden sind. Eine andere Ausführungsvariante sieht eine getrennte Ausbildung zweier Magnetisierungskörper-Paare mit jeweils unterschiedlichen Bauhöhen vor, die eine räumlich getrennte Überkreuzstellung in Bezug auf ihre magnetisch wirksamen Verbindungsjoche erlauben.

Zur Variation des magnetischen Flusses der jeweils über die Magnetisierungskörper in den Prüfkörper einzuleitenden Magnetfelder sind wenigstens an einem, vorzugsweise jedoch an sämtlichen Magnetisierungskörpern Mittel zur Einflussnahme auf die Stärke des magnetischen Flusses vorgesehen. Wie die weiteren Ausführungen zeigen werden betreffen die Mittel im Falle elektromagnetisch ausgebildeter Magnetisierungskörper die an den Magnetisierungskörper angebrachten, elektrisch aktivierbaren Magnetspulen, und im Falle permanentmagnetischer Magnetisierungskörper sind mit den Magnetisierungskörpern in magnetische Wechselwirkung tretende, beweglich angeordnete magnetische Flussleitstücke vorgesehen.

Zwar beschränken sich die nachstehend erläuterten Ausführungsbeispielsweise auf EMUS-Wandlersystemen mit einer Magnetisierungseinheit, die auf der Grundlage jeweils zweier in Kreuzstellung angeordneter Magnetisierungskörper-Paare aufgebaut ist, gleichwohl ist es möglich lediglich drei oder auch mehr als vier Magnetisierungskörper in Alleinstellung oder in sternförmiger gegenseitiger Jochverbindung auszubilden. Allen lösungsgemäß ausgebildeten EMUS-Wandlersystemen liegt der gemeinsame Lösungsgedanke zugrunde, durch kontrollierte Überlagerung wenigstens zweier steuerbarer Magnetfelder ein einheitliches resultierendes Magnetfeld zu generieren, dessen Magnetfeldlinien parallel zur Prüfkörperoberfläche orientiert sind und um eine senkrecht zur Prüfkörperoberfläche orientierte Achse kontrolliert gedreht werden können.

Ein auf diesem Wirkprinzip beruhendes lösungsgemäßes Verfahren zur Erzeugung von Ultraschallwellen in Form von linear polarisierten Transversalwellen mit variabel vorgebbarer Polarisationsrichtung zeichnet sich demzufolge dadurch aus, dass wenigstens zwei parallel zur Prüfkörperoberfläche orientierte Magnetfelder innerhalb des Prüfkörpers erzeugt werden, deren zuordenbare Magnetfeldlinien sich unter einem Winkel α ≠ 0°, vorzugsweise α = 90° schneiden, und dass eine Änderung des magnetischen Flusses von wenigstens einem der beiden Magnetfelder derart vorgenommen wird, dass sich ein einheitliches parallel zur Prüfkörperoberfläche orientiertes Magnetfeld mit einer einheitlich vorgebbaren Magnetfeldlinienorientierung ergibt. Die Erzeugung der im Prüfkörper wirkenden Magnetfelder kann entweder mit Hilfe einer Elektromagnetanordnung oder einer Permanentmagnetanordnung realisiert werden. Im Falle einer Elektromagnetanordnung wird die Änderung des magnetischen Flusses des wenigstens einen beteiligten Magnetfeldes durch kontrollierte Variation einer die Elektromagnetanordnung speisenden elektrischen Versorgungsspannung und/oder elektrischen Strom vorgenommen. Im Falle der Erzeugung der Magnetfelder mittels einer Permanentmagnetanordnung gilt es zur Änderung des magnetischen Flusses wenigstens eines der beteiligten Magnetfelder eine räumliche Variation wenigstens eines Permanentmagneten oder eines magnetischen Flussleitstückes vorzunehmen. Konkrete Realisierungsformen sind den im weiteren beschriebenen Ausführungsbeispielen zu entnehmen. Auch ist es denkbar beide Prinzipien zur Magnetfelderzeugung miteinander zu kombinieren, indem bspw. ein Magnetisierungskörper-Paar von jeweils zwei in Kreuzstellung angeordneten Magnetisierungskörper-Paare aus Permanentmagneten zusammengesetzt ist und das andere Magnetisierungskörper-Paar in Form einer Elektromagnetanordnung ausgebildet ist.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: EMUS-Wandlersystem in Form einer Elektromagnetanordnung in Form eines einstückigen Kreuzjoches,
- Fig. 2: EMUS-Wandler (Stand der Technik),
- Fig. 3a, b, c: Sequenzbilddarstellungen zur Illustration der räumlichen Lageveränderung der Magnetfeldorientierung mittels einer Elektromagnetanordnung,
- Fig. 4: EMUS-Wandlersystem in Form einer Elektromagnetanordnung mit getrennt ausgebildeten Magnetisierungskörper-Paaren in Kreuzstellung sowie
- Fig. 5: EMUS-Wandlersystem in Form einer Permanentmagnetanordnung.

### Wege zur Ausführung der Erfindung, gewerbliche Verwendbarkeit

Figur 1 zeigt in perspektivischer Schrägansicht ein EMUS-Wandlersystem, das über vier einzelne Magnetisierungskörper 1 a, 1 b, 1 c und 1 d verfügt, die mit ihren jeweils stirnseitig frei endenden Oberflächen bündig an der Prüfkörperoberfläche eines Prüfkörpers 2 aufliegen. Die Magnetisierungskörper 1 a, 1 b, 1 c, 1 d sind länglich, vorzugsweise quader- bzw. stabartig ausgeführt und überdies an ihren jeweils den Prüfkörper 2 abgewandten Endbereichen einstückig mit einem Kreuzjoch 1 x verbunden. Die Magnetisierungskörper 1 a, 1 b, 1 c, 1 d sowie auch das Kreuzjoch 1 x sind aus einem ferromagnetischen Material gefertigt und stellen in Verbindung mit Magnetisierungsspulen 4, die jeweils um die einzelnen Magnetisierungskörper 1a -1 d angeordnet sind, eine Elektromagnetanordnung dar. Auf die zusätzliche Berücksichtigung einer die einzelnen Magnetisierungsspulen 4 mit elektrischer Energie versorgenden Spannungseinheit ist aus Gründen einer besseren Übersichtlichkeit verzichtet worden.

In Projektion auf die Prüfkörperoberfläche mittig unter der Kreuzjochanordnung 1 x befindet sich auf der Prüfkörperoberfläche ein HF-Spulensystem 3, dessen Hochfrequenzfeld das innerhalb des Prüfkörpers 2 vorherrschende Magnetfeld zu modulieren vermag, wodurch letztlich innerhalb des Prüfkörpers 2 linear polarisierte Ultraschalltransversalwellen erzeugt werden.

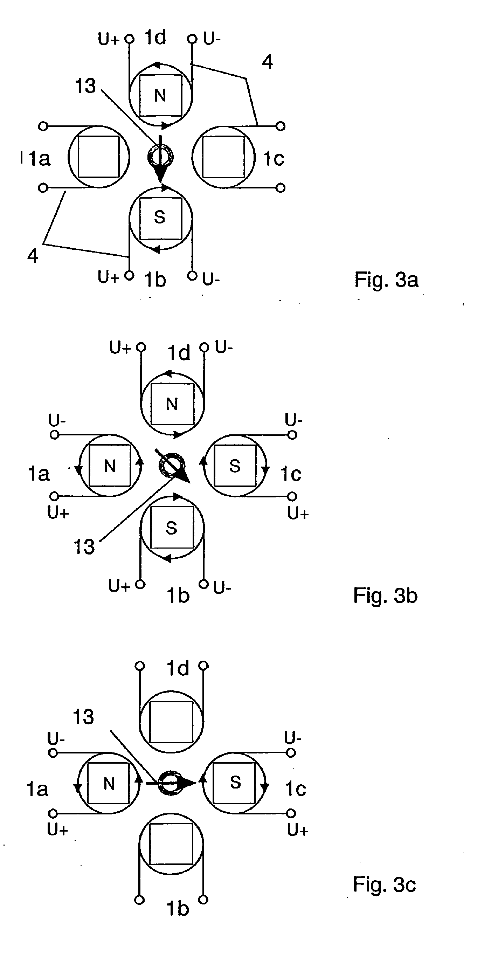

Zur Illustration der Änderung der räumlichen Ausrichtung des innerhalb des Prüfkörpers 2 vorherrschenden Magnetfeldes sei auf die Sequenzbilddarstellung in den Figuren 3a -3c verwiesen, in denen in Projektion auf die Prüfkörperoberfläche jeweils die vier Magnetisierungskörper 1a - 1d mit den diesen jeweils umgebenden Magnetisierungsspulen 4 illustriert sind. In der Sequenzbilddarstellung gemäß Figur 3a sei angenommen, dass die Magnetisierungsspulen der Magnetisierungskörper 1a, 1 c stromlos geschaltet sind, so dass zwischen diesen beiden Magnetisierungskörpern 1a, 1c kein Magnetfeld vorherrscht. Die Magnetisierungsspulen 4 bezüglich der Magnetisierungskörper 1 b, 1 d sind derart aktiviert, so dass der Magnetisierungskörper 1 b an der Prüfkörperoberfläche einen magnetischen Südpol sowie der Magnetisierungskörper 1d einen magnetischen Nordpol bilden. Somit kommt es zu einem parallel zur Prüfkörperoberfläche orientierten Magnetfeld 31, dessen Magnetfeldlinien vom Nord- zum Südpol, d.h. im dargestellten Fall gemäß Figur 3a von oben nach unten orientiert sind.

Werden zusätzlich zu den an den Magnetisierungskörpern 1 b, 1 d aktivierten Magnetisierungsspulen auch jene der Magnetisierungskörper 1a, 1 c aktiviert, wie dies in Figur 3b illustriert ist, so überlagern sich zwei Magnetfelder zu einem resultierenden Magnetfeld 13 im Mittenbereich aller vier Magnetisierungskörper 1a - 1d in der in Figur 3b angegebenen Weise. Es stellt sich in diesem Fall ein um 45° verglichen zum Sequenzbild gemäß Figur 3a räumlich gedrehtes Magnetfeld 13 ein.

Werden, wie im Sequenzfall gemäß Figur 3c die Magnetisierungsspulen der Magnetisierungskörper 1b und 1d stromlos geschaltet, so herrscht ausschließlich das Magnetfeld zwischen den Magnetisierungskörpern 1a und 1 c vor, d.h. nun weist das parallel zur Prüfkörperoberfläche orientierte Magnetfeld 13 von links nach rechts. In der Zusammenschau der Sequenzbilder der Figur 3a bis 3c ist somit die Orientierung des Magnetfeldes 13 um exakt 90° gedreht worden, ohne dabei die Magnetisierungskörper 1 a, 1 b, 1 c, 1 d räumlich zu bewegen.

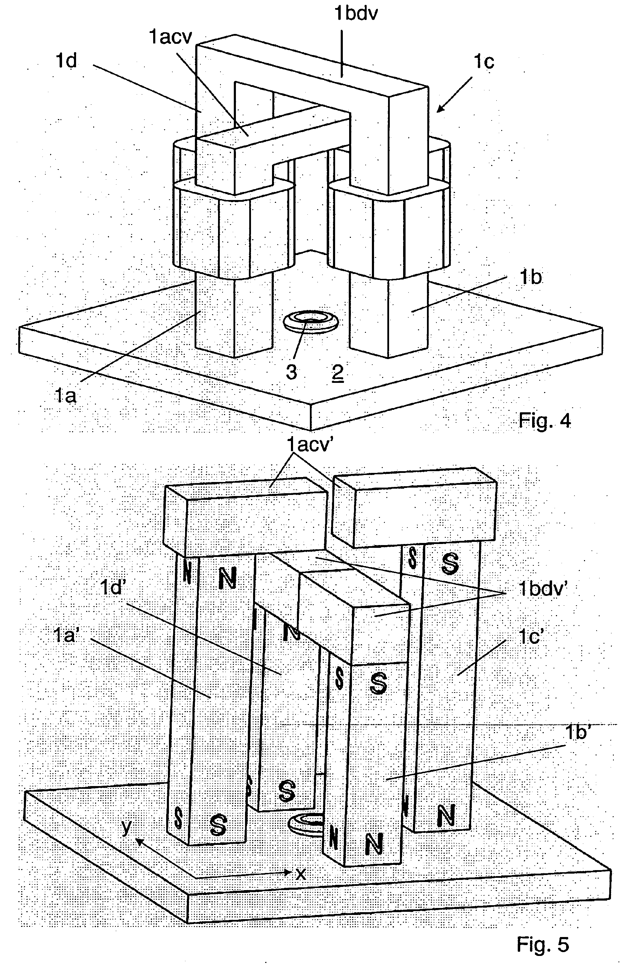

Figur 4 zeigt eine weitere Ausgestaltungsform, die gleichsam wie das in Figur 1 illustrierte Ausführungsbeispiele über vier Magnetisierungskörper 1a bis 1 d verfügt, die jedoch im Unterschied zu Figur 1a nicht über ein einstückiges Kreuzjoch miteinander verbunden sind, sondern jeweils paarweise über magnetisch wirksame Verbindungsjoche 1 acv, 1 bsv. Zur Realisierung der Kreuzstellung, gleichsam jener in Figur 1, sind die Magnetisierungskörper 1 b und 1 d länger gegenüber den Magnetisierungskörper 1a, 1 c ausgebildet, so dass sich die einzelnen magnetisch wirksamen Verbindungsjoche 1 acv, 1 bdv regelrecht überkreuzen. Der Wirkmechanismus ist identisch zu jenem, der unter Bezugnahme auf die Sequenzbilddarstellung gemäß Figur 3a bis 3c erläutert worden ist.

In Figur 5 ist eine Ausführungsform für ein EMUS-Wandlersystem mit einer Magnetisierungseinheit gezeigt, die ausschließlich aus Permanentmagneten 1a', 1 b', 1 c' und 1 d' besteht. Die magnetische Polung der als Stabmagnete ausgebildeten Permanentmagnete 1a' bis 1 d' ergeben anhand der aus den in Figur 5 enthaltenen Bezeichnungen für N = Nordpol und S = Südpol. Durch die Permanentmagnete 1a' und 1 c' wird ein erstes parallel zur Prüfkörperoberfläche innerhalb des Prüfkörpers 2 orientiertes Magnetfeld in x-Richtung generiert und durch die Permanentmagnete 1 b' und 1d' ein zweites parallel zur Prüfkörperoberfläche orientiertes Magnetfeld in y-Richtung. X- und y-Richtung sind orthogonal zueinander orientiert.

Zudem sind die Permanentmagnet-Paare 1a'/1c' sowie 1b'/1d' jeweils über geteilt ausgebildete, magnetisch wirksame Verbindungsjoche 1 acv', 1 bdv' miteinander verbunden.

Um die Richtung des Magnetfeldes am Ort des HF-Spulsystems 3 innerhalb des Prüfkörpers 2 kontrolliert schwenken zu können, gilt es den magnetischen Fluss durch die jeweils geteilt ausgebildeten Verbindungsjoche 1 acv', 1 bdv' kontrolliert zu variieren. Dies wird dadurch erreicht, dass jeder einzelne Teil der Verbindungsjoche 1 acv', 1 bdv' über eine nicht weiter dargestellte Aktorik räumlich beweglich gelagert ist. Sind beide Teile des jeweiligen Verbindungsjoches in direktem Kontakt, wie dies in Figur 5 bei den dargestellten Permanentmagneten 1 b' und 1 d' der Fall ist, so ist der magnetische Fluss in diesem betrachteten Verbindungsjoch 1 bdv' maximal. Folglich ist auch der magnetische Fluss, der durch die Permanentmagnete 1 b' und 1 d' in den Prüfkörper 2 eingeleitet wird, maximal. Befindet sich jedoch ein Luftspalt zwischen den beiden Teilen des Verbindungsjoches, wie es gemäß Figur 5 bei den Permanentmagneten 1a' und 1 c' der Fall ist, so reduziert sich der magnetische Fluss in Abhängigkeit zur Spaltbreite. Im Falle von Figur 5 wird der Prüfkörper 2 hauptsächlich durch die über das Verbindungsjoch 1 bdv' kurzgeschlossenen Permanentmagnete 1b/1d magnetisiert. Dieses Verbindungsjoch 1 bdv' gibt damit auch die Richtung des Magnetfeldes im Prüfkörper am Ort des HF-Spulensystems vor. Wird dagegen bei allen beiden Verbindungsjochen der Luftspalt geschlossen, so überlagern sich die Magnetfelder beider Joche bzw. beider Permanentmagnet-Paare 1a'/1c' und 1b'/1d', so dass sich eine Magnetfeldrichtung von 45° einstellt, vergleichbar der Sequenzbilddarstellung in Figur 3b.

Mit einer geeigneten Aktorik, mit der es möglich ist die Lage der Teilstücke der Verbindungsjoche 1 acv', 1 bdv' in der vorstehend beschriebenen Weise zu variieren, können Richtung und Feldstärke des resultierenden Magnetfeldes innerhalb des Prüfkörpers 2 am Ort des HF-Spulensystems 3 ausschließlich mit mechanischen Mitteln verändert werden.

Wie bereits vorstehend erwähnt ist es grundsätzlich möglich, die Anzahl der beteiligten Magnetisierungskörper zur Erzeugung eines innerhalb des Prüfkörpers 2 resultierenden Magnetfeldes beliebig zu wählen, d.h. wenigstens n = 3 Magnetisierungskörper, vorzugsweise jedoch eine geradzahlige Anzahl n .

Mit dem lösungsgemäßen EMUS-Wandlersystem ist eine Reihe von Vorteilen verbunden. So muss das lösungsgemäße EMUS-Wandlersystem nicht gegenüber dem Prüfkörper mechanisch verdreht werden, um die Polarisationsrichtung der Transversalwelle zu ändern. Die Position des EMUS-Wandlersystems kann während der Drehung der Polarisationsrichtung exakt eingehalten werden, da der Wandler selbst nicht bewegt wird.

Das Wandlerprinzip kann für automatische Prüfsysteme ohne Koppelmittel eingesetzt werden, so dass es auch für Anwendungen bei hohen Temperaturen zur Verfügung steht.

Die Hauptrichtungen anisotroper Prüfkörper brauchen vor der Prüfung nicht bekannt zu sein. Das lösungsgemäße EMUS-Wandlersystem kann beliebig auf einen ansonsten unbekannten Prüfkörper aufgesetzt und positioniert werden. Dennoch ist es möglich, die Hauptrichtungen durch stationäres Drehen der Polarisationsrichtung aufzufinden. Grundsätzlich können beliebige Polarisationsrichtungen der linear polarisierten Transversalwelle eingestellt werden.

Ferner ist es möglich, durch Messen der Schallgeschwindigkeit in Abhängigkeit von der Polarisationsrichtung Texturen und/oder innere Spannungen nach Stärke und Richtung zu bestimmen. Für die Fehlerprüfung kann durch das lösungsgemäße Drehen der Polarisationsrichtung die mögliche Richtung eines Risses vollautomatisch erfasst werden. Ferner kann z.B. bei stark anisotropen Werkstoffen stets die optimale Polarisationsrichtung für die Prüfaufgabe ohne ein aufwendiges mechanisches Drehen des gesamten Prüfkopfes aufgefunden werden.

### Bezugszeichenliste

- 1: Magnetisierungseinheit
- 1 a,b,c,d: Magnetisierungskörper
- 1a',b',c',d': Permanentmagnete
- 1 x: Kreuzjoch
- 1 acv, 1 bdv: magnetisch wirksames Verbindungsjoch
- 1 acv', 1 bdv': geteiltes Verbindungsjoch
- 13: Magnetfeld
- 2: Prüfkörper
- 3: HF-Spulensystem
- 4: Magnetisierungsspulen

## Patentansprüche

1. EMUS-Wandlersystem zur Erzeugung oder Detektion linear polarisierter Transversalwellen mit variabel vorgebbarer Polarisationsrichtung innerhalb eines zumindest ferromagnetische Materialanteile enthaltenden Prüfkörpers (2) mit einer Prüfkörperoberfläche,
mit einer Magnetisierungseinheit (1), die wenigstens drei, vorzugsweise vier, räumlich voneinander beabstandete Magnetisierungskörper (1a,1b,1c,1d) aufweist, die auf die Prüfkörperoberfläche aufsetzbar sind und jeweils Magnetfeldlinien mit einem vorgebbaren magnetischen Fluss in den Prüfkörper (2) einleiten, und die dazu vorgesehen und eingerichtet ist, an der Oberfläche des Prüfkörpers (2) anordenbar zu sein, und ein parallel zur Prüfkörperoberfläche innerhalb des Prüfkörpers (2) orientiertes Magnetfeld zu erzeugen, sowie mit wenigstens einer HF-Spulenanordnung,
**dadurch gekennzeichnet, dass** die wenigstens eine HF-Spulenanordnung (3) auf der Prüfkörperoberfläche angeordnet ist und ein mit dem parallel zur Prüfkörperoberfläche innerhalb des Prüfkörpers (2) orientierten Magnetfeld in Überlagerung tretendes HF-Feld zur Erzeugung oder Detektion von linear polarisierten Transversalwellen mit senkrecht zur Prüfkörperoberfläche orientierter Schallausbreitungsrichtung erzeugt oder detektiert, und
dass Mittel vorgesehen sind, durch die der magnetische Fluss der in den Prüfkörper (2) einzuleitenden Magnetfeldlinien, die von wenigstens einem Magnetisierungskörper (1 a, 1 b, 1 c, 1 d) ausgehen, derart veränderbar ist, dass die Raumrichtung des sich parallel zur Prüfkörperoberfläche innerhalb des Prüfkörpers (2) ausbildenden Magnetfeldes (13) vorgebbar änderbar ist.

2. EMUS-Wandlersystem nach Anspruch 1,
**dadurch gekennzeichnet, dass** die Magnetisierungskörper (1a, 1 b, 1 c, 1 d) jeweils eine stirnseitig frei zugängliche Oberfläche, die zum Aufsetzen auf die Prüfkörperoberfläche ausgebildet ist, sowie einen der frei zugänglichen Oberfläche gegenüberliegenden Bereich aufweisen, der über wenigstens ein magnetisch wirksames Verbindungsjoch (1 acv, 1 bdv) mit wenigstens einem anderen Magnetisierungskörper (1a, 1 b, 1 c, 1 d) verbunden oder verbindbar ist.

3. EMUS-Wandler nach Anspruch 1 oder 2,
**dadurch gekennzeichnet, dass** die Magnetisierungseinheit (1) in Art einer Elektromagnetanordnung ausgebildet ist,
dass die Mittel zur Veränderung des magnetischen Flusses der in den Prüfkörper (2) einzuleitenden Magnetfeldlinien in Form elektrischer Spulen (4) ausgebildet sind, von denen wenigstens eine elektrisch Spule (4) an jeweils einem Magnetisierungskörper (1 a, 1 b, 1 c, 1 d) angebracht ist, und
dass die elektrischen Spulen (4) mit einer steuerbaren Gleich- oder Wechselspannungsquelle verbunden sind.

4. EMUS-Wandlersystem nach Anspruch 1 oder 2,
**dadurch gekennzeichnet, dass** die Magnetisierungskörper (1 a, 1 b, 1 c, 1 d) jeweils in Form eines Permanentmagneten (1a,' 1b', 1c', 1d') ausgebildet sind, und
dass die Mittel zur Veränderung des magnetischen Flusses der in den Prüfkörper (2) einzuleitenden Magnetfeldlinien in Form wenigstens eines magnetischen Flussleitstückes ausgebildet sind, dessen räumliche Lage zu dem wenigstens einen Magnetisierungskörper (1 a, 1 b, 1 c, 1 d) veränderbar ist.

5. EMUS-Wandlersystem nach Anspruch 4,
**dadurch gekennzeichnet, dass** die magnetischen Flussleitstücke wenigstens zweier Magnetisierungskörper Teile eines magnetisch wirksamen Verbindungsjoches sind, und
dass eine steuerbare Kinematikeinheit vorgesehen ist, durch die die räumliche Lage wenigstens eines magnetischen Flussleitstückes veränderbar ist.

6. EMUS-Wandlersystem nach Anspruch 1 oder 2,
**dadurch gekennzeichnet, dass** die Magnetisierungseinheit (1) eine Elektromagnetanordnung und eine Permanentmagnetanordnung aufweist,
dass die Mittel zur Veränderung des magnetischen Flusses der in den Prüfkörper (2) einzuleitenden Magnetfeldlinien bei der Elektromagnetanordnung in Form elektrischer Spulen (4) ausgebildet sind, von denen wenigstens eine elektrisch Spule an jeweils einem Magnetisierungskörper (1 a, 1 b, 1 c, 1 d) angebracht ist, und dass die elektrischen Spulen (4) mit einer steuerbaren Gleich- oder Wechselspannungsquelle verbunden sind, und dass die Mittel zur Veränderung des magnetischen Flusses der in den Prüfkörper (2) einzuleitenden Magnetfeldlinien bei der Permanentmagnetanordnung in Form wenigstens eines magnetischen Flussleitstückes ausgebildet sind, dessen räumliche Lage zu dem wenigstens einen Magnetisierungskörper (1 a, 1 b, 1 c, 1 d) veränderbar ist.

7. EMUS-Wandlersystem nach einem der Ansprüche 1 bis 6,
**dadurch gekennzeichnet, dass** wenigstens zwei Magnetisierungskörper (1a, 1 b, 1 c, 1 d) über ein magnetisch wirksames Verbindungsjoch (1 acv, 1 bdv) verbunden oder verbindbar sind und ein Magnetisierungskörper-Paar bilden, dass wenigstens zwei Magnetisierungskörper-Paare derart ausgebildet und angeordnet sind, dass sich die magnetisch wirksamen Verbindungsjoche (1acv, 1 bdv) der wenigstens zwei Magnetisierungskörper-Paare in Projektion auf die Prüfkörperoberfläche durchkreuzen oder überkreuzen.

8. Verfahren zur Erzeugung oder Detektion von Ultraschallwellen in Form von linear polarisierten Transversalwellen mit variabel vorgebbarer Polarisationsrichtung innerhalb eines zumindest ferromagnetische Materialanteile enthaltenden Prüfkörpers (2) sowie mit senkrecht zu einer Oberfläche des Prüfkörpers (2) orientierter Schallausbreitungsrichtung, unter Nutzung elektromagnetischer Ultraschallwellenerzeugung, bei der mit einer Magnetisierungseinheit (1) ein parallel zur Oberfläche des Prüfkörpers (2) orientiertes Magnetfeld (13) innerhalb des Prüfkörpers (2) erzeugt wird und mit Hilfe einer HF-Spulenanordnung (3) ein hochfrequentes elektromagnetisches Feld erzeugt wird, durch das das parallel zur Prüfkörperoberfläche orientierte magnetische Feld (13) moduliert wird,
**dadurch gekennzeichnet, dass** wenigstens zwei parallel zur Prüfkörperoberfläche orientierte Magnetfelder innerhalb des Prüfkörpers (2) erzeugt werden, deren zuordenbare Magnetfeldlinien sich unter einem Winkel a ungleich 0° schneiden, und dass eine Änderung des magnetischen Flusses von wenigstens einem der beiden Magnetfelder derart vorgenommen wird, dass sich ein einheitliches parallel zur Prüfkörperoberfläche orientiertes Magnetfeld (13) mit einer einheitlich vorgebbaren Magnetfeldlinienorientierung ergibt.

9. Verfahren nach Anspruch 8,
**dadurch gekennzeichnet, dass** die wenigstens zwei parallel zur Prüfkörperoberfläche orientierten Magnetfelder innerhalb des Prüfkörpers (2) mittels einer Elektromagnetanordnung erzeugt werden, und
dass die Änderung des magnetischen Flusses des wenigstens einen Magnetfeldes durch Anpassen der elektrischen Versorgungsspannung der das wenigstens eine Magnetfeld erzeugenden Elektromagnetanordnung vorgenommen wird.

10. Verfahren nach Anspruch 8,
**dadurch gekennzeichnet, dass** die wenigstens zwei parallel zur Prüfkörperoberfläche orientierten Magnetfelder innerhalb des Prüfkörpers (2) mittels einer Permanentmagnetanordnung erzeugt werden, und
dass die Änderung des magnetischen Flusses des wenigstens einen Magnetfeldes durch räumliche Variation wenigstens eines Permanentmagneten (1a', 1b', 1c', 1d') oder eines magnetischen Flussleitstückes vorgenommen wird.

11. Verfahren nach Anspruch 8,
**dadurch gekennzeichnet, dass** wenigstens ein parallel zur Prüfkörperoberfläche orientiertes Magnetfeld innerhalb des Prüfkörpers (2) mittels einer Permanentmagnetanordnung und wenigstens ein weiteres parallel zur Prüfkörperoberfläche orientiertes Magnetfeld innerhalb des Prüfkörpers (2) mittels einer Elektromagnetanordnung erzeugt werden, und
dass die Änderung des magnetischen Flusses des wenigstens einen durch die Permanentmagnetanordnung erzeugten Magnetfeldes durch räumliche Variation wenigstens eines Permanentmagneten (1a', 1b', 1c', 1d') oder eines magnetischen Flussleitstückes vorgenommen wird und/oder
dass die Änderung des magnetischen Flusses des wenigstens durch die Elektromagnetanordnung erzeugten Magnetfeldes durch Anpassen der elektrischen Versorgungsspannung der das wenigstens eine Magnetfeld erzeugenden Elektromagnetanordnung vorgenommen wird.

12. Verfahren nach einem der Ansprüche 8 bis 11,
**dadurch gekennzeichnet, dass** als Winkel a 90° gewählt wird.

## Claims

1. An EMUS transducer system for producing or detecting linearly polarized transverse waves with a variably predeterminable polarization direction within a test specimen (2) containing at least ferromagnetic material fractions with a test specimen surface,
comprising a magnetization unit (1) which has at least three, preferably four, magnetization bodies (1a, 1b, 1c, 1d) spatially separated from one another which are positionable on the test specimen surface and each introduce magnetic field lines with a predeterminable magnetic flux into the test specimens (2) and which are provided and set up to be locatable on the surface of the test specimen (2) and to produce a magnetic field oriented parallel to the test specimen surface within the test specimen (2) and also with at least one HF coil arrangement,
**characterized in that** the at least one HF coil arrangement (3) is arranged on the test specimen surface and produces or detects a HF field overlapping the magnetic field oriented parallel to the test specimen surface within the test specimen (2) for producing or detecting linearly polarized transverse waves with a sound propagation direction oriented perpendicularly to the test specimen surface and
that means are provided through which the magnetic flux of the magnetic field lines to be introduced into the test specimen (2) which emanate from at least one magnetization body (1a, 1b, 1c, 1d) can be varied in such a manner that the spatial direction of the magnetic field (13) formed parallel to the test specimen surface within the test (2) specimen can be changed in a predeterminable manner.

2. The EMUS transducer system according to claim 1,
**characterized in that** the magnetization bodies (1a, 1b, 1c, 1d) each have a freely accessible surface at an end face which is configured for placement onto the test specimen surface and also a region opposite the freely accessible surface which is connected or connectable via at least one magnetically active connecting yoke (1acv, 1bdv) to at least one other magnetization body (1a, 1b, 1c, 1d).

3. The EMUS transducer system according to claim 1 or 2,
**characterized in that** the magnetization unit (1) is designed as an electromagnet configuration,
that the means for changing the magnetic flux of the magnetic field lines to be introduced into the test specimen (2) take the form of electrical coils (4), of which at least one electrical coil (4) is attached to a magnetization body (1a, 1b, 1c, 1d) in each case and that the electrical coils (4) are connected to a controllable direct or alternating current source.

4. The EMUS transducer system according to claim 1 or 2,
**characterized in that** the magnetization bodies (1a, 1b, 1c, 1d) each take the shape of a permanent magnet (1a', 1b', 1c', 1d') and
that the means for changing the magnetic flux of the magnetic field lines to be introduced into the test specimen (2) take the shape of at least one magnetic flux conducting piece, the spatial position whereof can be changed relative to the at least one magnetization body (1a, 1b, 1c, 1d).

5. The EMUS transducer system according to claim 4,
**characterized in that** the magnetic flux conducting pieces of at least two magnetization bodies are parts of a magnetically active connecting yoke and
that a controllable kinematic unit is provided for changing the spatial position of at least one magnetic flux conducting piece.

6. The EMUS transducer system according to claim 1 or 2,
**characterized in that** the magnetization unit (1) comprises an electromagnet configuration and a permanent magnet configuration,
that the means for changing the magnetic flux of the magnetic field lines to be introduced into the test specimen (2) in the electromagnet configuration take the shape of electrical coils (4) with at least one electrical coil being attached to one magnetization body (1a, 1b, 1c, 1d) in each case and that the electrical coils (4) are connected to a controllable direct or alternating current source and that the means for changing the magnetic flux of the magnetic field lines to be introduced into the test specimen (2) in the permanent magnet configuration take the shape of at least one magnetic flux conducting piece, the spatial position whereof can be changed relative to the at least one magnetization body (1a, 1b, 1c, 1d) .

7. The EMUS transducer system according to one of claims 1 to 6,
**characterized in that** at least two magnetization bodies (1a, 1b, 1c, 1d) are connected or connectable via a magnetically active connecting yoke (1acv, 1bdv) and form a magnetization body pair,
that at least two magnetization body pairs are constructed and arranged in such a manner that the magnetically active connecting yokes (1acv, 1bdv) of the at least two magnetization body pairs cross or intersect projecting onto the test specimen surface.

8. A method for producing or detecting ultrasound waves in the form of linearly polarized transverse waves with a variably predeterminable polarization direction within a test specimen (2) containing at least ferromagnetic material fractions and with a sound propagation direction oriented perpendicularly to a surface of the test specimen (2), using electromagnetic ultrasound wave generation, in which using a magnetization unit (1) a magnetic field (13) oriented parallel to the surface of the test specimen (2) is produced within the test specimen (2) and a high-frequency electromagnetic field is produced with the help of a HF coil configuration (3), by means of which the magnetic field (13) oriented parallel to the test specimen surface is modulated,
**characterized in that** at least two magnetic fields oriented parallel to the test specimen surface are produced within the test specimen (2), the attributable magnetic field lines whereof intersect at an angle α other than 0° and that the magnetic flow of at least one of the two magnetic fields is changed in such a manner that a uniform magnetic field (13) oriented parallel to the test specimen surface with a uniformly predeterminable magnetic field line orientation results.

9. The method according to claim 8,
**characterized in that** the at least two magnetic fields oriented parallel to the test specimen surface are produced within the test specimen (2) by means of an electromagnet configuration and
that the magnetic flux of the at least one magnetic field is changed by adapting the electrical supply voltage of the electromagnet configuration which produces the at least one magnetic field.

10. The method according to claim 8,
**characterized in that** the at least two magnetic fields oriented parallel to the test specimen surface are produced within the test specimen (2) by means of a permanent magnet configuration and
that the magnetic flux of the at least one magnetic field is changed by spatial variation of at least one permanent magnet (1a', 1b', 1c', 1d') or of a magnetic flux conducting piece.

11. The method according to claim 8,
**characterized in that** at least one magnetic field oriented parallel to the test specimen surface is produced within the test specimen (2) by means of a permanent magnet configuration and at least one further magnetic field oriented parallel to the test specimen surface is produced within the test specimen (2) by means of an electromagnet configuration and
that the magnetic flux of the at least one magnetic field produced by the permanent magnet configuration is changed by spatial variation of at least one permanent magnet (1a', 1b', 1c', 1d') or a magnetic flux conducting piece and/or
that the magnetic flux of the magnetic field produced at least by the electromagnetic configuration is changed by adapting the electrical supply voltage of the electromagnet configuration producing the at least one magnetic field.

12. The method according to one of claims 8 to 11,
**characterized in that** an angle α 90° is selected.

## Revendications

1. Système de transducteur électromagnétique (EMAT) pour la génération ou détection d'ondes transversales polarisées linéairement avec direction de polarisation prescriptible variablement à l'intérieur d'un échantillon (2), contenant au moins des parts de matériau ferromagnétique, avec une surface d'échantillon,
avec une unité de magnétisation (1) qui présente au moins trois, de préférence quatre corps de magnétisation (1a, 1b, 1c, 1d) espacés spatialement les uns des autres, lesquels peuvent être posés sur la surface d'échantillon et induisent respectivement des lignes de champ magnétique avec un flux magnétique prescriptible dans l'échantillon (2) et qui sont prévus et étudiés pour être disposés sur la surface de l'échantillon (2) et générer un champ magnétique orienté parallèlement à la surface d'échantillon à l'intérieur de l'échantillon (2), ainsi qu'avec au moins un agencement de bobines HF,
**caractérisé en ce que** l'au moins un agencement de bobines HF (3) est disposé sur la surface d'échantillon et génère ou détecte un champ HF se superposant au champ magnétique orienté parallèlement à la surface d'échantillon à l'intérieur de l'échantillon (2) pour la génération ou détection d'ondes transversales polarisées linéairement avec une direction de propagation du son orientée perpendiculairement à la surface d'échantillon, et
**en ce que** des moyens sont prévus, grâce auxquels on peut faire varier le flux magnétique des lignes de champ magnétique à induire dans l'échantillon (2) qui partent d'au moins un corps de magnétisation (1a, 1b, 1c, 1d) d'une manière telle, que la direction spatiale du champ magnétique (13) se formant parallèlement à la surface d'échantillon à l'intérieur de l'échantillon (2) puisse être modifiée de façon prescriptible.

2. Système de transducteur électromagnétique (EMAT) selon la revendication 1,
**caractérisé en ce que** les corps de magnétisation (1a, 1b, 1c, 1d) présentent respectivement une surface librement accessible côté frontal, laquelle est réalisée pour la mise en place sur la surface d'échantillon, ainsi qu'une zone située en vis-à-vis de la surface librement accessible, laquelle est reliée, ou peut être reliée par l'intermédiaire d'au moins une culasse de liaison magnétiquement efficace (1acv, 1bdv) à au moins un autre corps de magnétisation (1a, 1b, 1c, 1d).

3. Système de transducteur électromagnétique (EMAT) selon la revendication 1 ou 2,
**caractérisé en ce que** l'unité de magnétisation (1) est réalisée à la manière d'un agencement d'électroaimants,
**en ce que** les moyens pour la modification du flux magnétique des lignes de champ magnétique à induire dans l'échantillon (2) sont réalisés sous la forme de bobines électriques (4), l'une au moins des bobines électriques (4) étant mise en place respectivement sur un corps de magnétisation (1a, 1b, 1c, 1d), et
**en ce que** les bobines électriques (4) sont reliées à une source de tension continue ou alternative pouvant être commandée.

4. Système de transducteur électromagnétique (EMAT) selon la revendication 1 ou 2,
**caractérisé en ce que** les corps de magnétisation (1a, 1b, 1c, 1d) sont respectivement réalisés sous la forme d'un aimant permanent (1a', 1b', 1c', 1d') et
**en ce que** les moyens pour la modification du flux magnétique des lignes de champ magnétique à induire dans l'échantillon (2) sont réalisés sous la forme d'au moins un élément de guidage de flux magnétique dont on peut faire varier la position spatiale par rapport à l'au moins un corps de magnétisation (1a, 1b, 1c, 1d).

5. Système de transducteur électromagnétique (EMAT) selon la revendication 4,
**caractérisé en ce que** les éléments de guidage de flux magnétique d'au moins deux corps de magnétisation sont des parties d'une culasse de liaison magnétiquement efficace, et
**en ce que** l'on prévoit une unité cinématique pouvant être commandée, grâce à laquelle on peut faire varier la position spatiale d'au moins un élément de guidage de flux magnétique.

6. Système de transducteur électromagnétique (EMAT) selon la revendication 1 ou 2,
**caractérisé en ce que** l'unité de magnétisation (1) présente un agencement d'électroaimants et un agencement d'aimants permanents, **en ce que** les moyens pour la modification du flux magnétique des lignes de champ magnétique à induire dans l'échantillon (2) sont réalisés sous la forme de bobines électriques (4) au niveau de l'agencement d'électroaimants, l'une au moins des bobines électriques étant disposée respectivement sur un corps de magnétisation (1a, 1b, 1c, 1d), et **en ce que** les bobines électriques (4) sont reliées à une source de tension continue ou alternative pouvant être commandée, et **en ce que** les moyens pour la modification du flux magnétique des lignes de champ magnétique à induire dans l'échantillon (2) sont réalisés sous la forme d'au moins un élément de guidage de flux magnétique au niveau de l'agencement d'aimants permanents dont on peut faire varier la position spatiale par rapport à l'au moins un corps de magnétisation (1a, 1b, 1c, 1d).

7. Système de transducteur électromagnétique (EMAT) selon l'une des revendications 1 à 6,
**caractérisé en ce qu'**au moins deux corps de magnétisation (1a, 1b, 1c, 1d) sont reliés, ou peuvent être reliés par l'intermédiaire d'au moins une culasse de liaison magnétiquement efficace (1acv, 1bdv) et forment une paire de corps de magnétisation,
**en ce qu'**au moins deux paires de corps de magnétisation sont réalisées et disposées d'une manière telle, que les culasse de liaison magnétiquement efficaces (1acv, 1bdv) des au moins deux paires de corps de magnétisation se croisent ou s'entrecroisent en projection sur la surface d'échantillon.

8. Procédé pour la génération ou détection d'ondes ultrasonores sous la forme d'ondes transversales polarisées linéairement avec une direction de polarisation prescriptible de façon variable à l'intérieur d'un échantillon (2) contenant au moins des parts de matériau ferromagnétique ainsi qu'avec une direction de propagation du son orientée perpendiculairement à la surface de l'échantillon (2) en utilisant la génération d'ondes ultrasonores électromagnétiques, dans lequel on génère, avec une unité de magnétisation (1), un champ magnétique (13) orienté parallèlement à la surface de l'échantillon (2) à l'intérieur de l'échantillon (2) et génère, à l'aide d'un agencement de bobines HF (3), un champ électromagnétique de haute fréquence grâce auquel le champ magnétique (13) orienté parallèlement à la surface d'échantillon est modulé,
**caractérisé en ce qu'**au moins deux champs magnétiques orientés parallèlement à la surface d'échantillon sont générés à l'intérieur de l'échantillon (2), dont les lignes de champ magnétique pouvant être associées se coupent selon un angle α différent de 0°, et **en ce qu'**une modification du flux magnétique d'au moins l'un des deux champs magnétiques est réalisée d'une manière telle, que l'on obtient un champ magnétique (13) homogène orienté parallèlement à la surface d'échantillon avec une orientation de lignes de champ magnétique prescriptible de façon homogène.

9. Procédé selon la revendication 8,
**caractérisé en ce que** les au moins deux champs magnétiques orientés parallèlement à la surface d'échantillon à l'intérieur de l'échantillon (2) sont générés au moyen d'un agencement d'électroaimants, et
**en ce que** la modification du flux magnétique de l'au moins un champ magnétique est réalisée par adaptation de la tension d'alimentation électrique de l'agencement d'électroaimants générant l'au moins un champ magnétique.

10. Procédé selon la revendication 8,
**caractérisé en ce que** les au moins deux champs magnétiques orientés parallèlement à la surface d'échantillon à l'intérieur de l'échantillon (2) sont générés au moyen d'un agencement d'aimants permanents, et
**en ce que** la modification du flux magnétique de l'au moins un champ magnétique est réalisée par variation spatiale d'au moins un aimant permanent (1a', 1b', 1c', 1d') ou d'un élément de guidage de flux magnétique.

11. Procédé selon la revendication 8,
**caractérisé en ce que** l'on génère au moins un champ magnétique orienté parallèlement à la surface d'échantillon à l'intérieur de l'échantillon (2) au moyen d'un agencement d'aimants permanents et au moins un autre champ magnétique orienté parallèlement à la surface d'échantillon à l'intérieur de l'échantillon (2) au moyen d'un agencement d'électroaimants, et
**en ce que** la modification du flux magnétique de l'au moins un champ magnétique généré par l'agencement d'aimants permanents est réalisée par variation spatiale d'au moins un aimant permanent (1a', 1b', 1c', 1d') ou d'un élément de guidage de flux magnétique, et/ou
**en ce que** la modification du flux magnétique de l'au moins un champ magnétique généré par l'agencement d'électroaimants est réalisée par adaptation de la tension d'alimentation électrique de l'agencement d'électroaimants générant l'au moins un champ magnétique.

12. Procédé selon l'une des revendications 8 à 11,
**caractérisé en ce qu'**en guise d'angle α, on choisit 90°.
